# NEUE EUROPÄISCHE PATENTSCHRIFT

(11) **EP 4 103 409 B2**
(45) Veröffentlichungstag und Bekanntmachung des Hinweises auf die Entscheidung über den Einspruch: **14.10.2026**
(45) Hinweis auf die Patenterteilung: 15.11.2023
(21) Anmeldenummer: 21718033.0
(22) Anmeldetag: 26.03.2021
(51) Int. Cl.: B60B 17/00

(54) **SCHALLDÄMPFUNGSVORRICHTUNG FÜR FAHRZEUGRÄDER**
NOISE REDUCTION DEVICE FOR VEHICLE WHEEL
MECHNISME DE AMORTISSEUR ACOUSTIQUE POUR ROUE DE VÉHICULE

(30) Priorität: 02.04.2020 AT 502792020
(43) Veröffentlichungstag der Anmeldung: 21.12.2022
(73) Patentinhaber: Siemens Mobility Austria GmbH, 1210 Wien (AT)
(72) Erfinder: KERN, Thomas, 8431 Gralla (AT); SCHLEINZER, Gerald, 8047 Graz (AT)
(74) Vertreter: Siemens Patent Attorneys
(86) Internationale Anmeldenummer: PCT/EP2021/057899
(87) Internationale Veröffentlichungsnummer: WO 2021/198062

(56) Entgegenhaltungen:
- EP-A1- 2 230 096
- EP-A1- 2 979 896
- EP-A1- 3 459 760
- EP-B1- 0 466 540
- EP-B1- 2 118 516
- EP-B1- 2 230 096
- EP-B1- 2 979 896
- CN-A- 1 123 378
- CN-A- 104 723 790
- CN-A- 106 004 228
- CN-A- 109 249 750
- CN-A- 110 641 226
- CN-U- 201 494 248
- CN-U- 205 970 619
- CN-U- 209 096 377
- DE-C1- 3 316 759
- DE-T2- 69 105 379
- JP-B2- 3 991 317

## Beschreibung

Die Erfindung betrifft eine Schalldämpfungsvorrichtung für Fahrzeugräder, insbesondere für Räder von Schienenfahrzeugen, umfassend ein Ringpaket mit zumindest einem offenen ersten Ring und einem offenen zweiten Ring, welchen eine viskoelastische erste Schicht oder ein offener Elastikring zwischengeordnet ist, wobei zumindest der erste Ring in einer Vertiefung eines Radkörpers eines Rads mit dem Radkörper verspannbar ist.

Bei einer Auslegung von Rädern von Fahrzeugen, beispielsweise von Schienenfahrzeugen, müssen durch Behörden oder Kunden festgelegte Geräuschgrenzwerte (z.B. betreffend Vorbeifahrtgeräusche der Fahrzeuge) berücksichtigt werden. Insbesondere bei hohen Fahrgeschwindigkeiten treten häufig starke Schallemissionen auf, welche oft durch Schallabsorber gedämpft werden. Weiterhin ist eine effektive Schalldämpfung in stark bebauten Umgebungen (z.B. für Fahrzeuge des Stadtverkehrs, wie beispielsweise Straßenbahnen) wichtig. Aus dem Stand der Technik ist beispielsweise die WO 2014/131676 A1 bekannt, in welcher ein schallgedämpftes Rad eines Schienenfahrzeugs beschrieben ist. An einem Radkranz, einer Radmitte zugewandt, sind paketartige Dämpfungselemente mit einer Mehrzahl an Schwingmassen unterschiedlicher Dicken vorgesehen. Diese Dämpfungselemente sind über viskoelastische Schichten mit dem Rad verbunden. Den Schwingmassen sind ferner viskoelastische Schichten unterschiedlicher Dicken zwischengeordnet.

Weiterhin zeigt die EP 0 466 540 A1 (und das Familienmitglied DE 691 05 379 T2) einen ringförmigen Schwingungsdämpfer, bei welchem offenen Ringen eine oder mehrere viskoelastische Schichten zwischengeordnet sind und welcher an einer Stirnseite eines Getrieberads in einer Vertiefung des Getrieberads vorgesehen ist.

Es ist in der EP 0 466 540 A1 jedoch nicht ersichtlich, inwieweit der Schwingungsdämpfer mittels eines Verschlusses gesichert ist.

Der Erfindung liegt die Aufgabe zugrunde, eine gegenüber dem Stand der Technik weiterentwickelte, konstruktiv einfache, auch für hohe Fahrgeschwindigkeiten und klotzgebremste Räder geeignete Schalldämpfungsvorrichtung mit einer mechanischen Sicherung anzugeben.

Erfindungsgemäß wird diese Aufgabe gelöst mit einer Schalldämpfungsvorrichtung der eingangs genannten Art, bei der ein Verschlussstück formschlüssig oder/und kraftschlüssig mit dem Ringpaket verbunden oder/und mit dem Ringpaket verklebt ist, wobei das Verschlussstück in einer Öffnung zwischen einem ersten Ende des Ringpakets und einem zweiten Ende des Ringpakets angeordnet ist, wobei das Ringpaket zumindest im Bereich des ersten Endes zumindest eine erste Bohrung aufweist, in welche ein Passstift des Verschlussstücks oder ein mit dem Verschlussstück verbundenes Passungsteil eingeführt ist oder zumindest im Bereich des ersten Endes das Ringpaket zumindest einen Passstift aufweist oder mit dem Ringpaket zumindest ein Passungsteil verbunden ist, welcher oder welches in eine Bohrung des Verschlussstücks eingeführt ist.

Dadurch ist das Ringpaket vor einem Herabfallen von dessen Träger (z.B. von dem Rad) geschützt. Es wird dadurch eine redundante Verlustsicherung erzielt, da der erste Ring zusätzlich auch in der Vertiefung des Rads vorgespannt bzw. mit dem Rad verspannt ist. Relativbewegungen des ersten Endes und des zweiten Endes des Ringpakets zueinander und gegeneinander werden aufgrund des Verschlussstücks auf ein vernachlässigbares bzw. notwendiges Ausmaß eingegrenzt.

Ein unbeabsichtigtes Ausfädeln des Ringpakets aus der Vertiefung wird dadurch vermieden.

Daher kann die erfindungsgemäße Schalldämpfungsvorrichtung auch bei Fahrzeugen mit hohen Fahrgeschwindigkeiten (z.B. bei Schienenfahrzeugen im Hochgeschwindigkeitsbetrieb, welche mit Fahrgeschwindigkeiten von größer als 300 km/h verkehren) sowie in Umgebungen mit starken Vibrationen, Stößen etc. eingesetzt werden. Selbstverständlich ist ein Einsatz der erfindungsgemäßen Schalldämpfungsvorrichtung auch für Fahrzeuge im Stadtverkehr (z.B. für Straßenbahnen) möglich.
Die Verlustsicherung weist eine geringe konstruktive Komplexität auf, auch eine Montage und eine Demontage des Verschlussstücks und des Ringpakets sind einfach und wenig zeitaufwendig. Dadurch erhält man ferner eine besonders einfache und robuste Ausgestaltung.

Günstig ist es, wenn zwischen dem Verschlussstück und dem Ringpaket im Bereich des ersten Endes oder des zweiten Endes ein Spalt ausgebildet ist.

Dadurch werden ein Toleranzausgleich und eine vereinfachte Montage des Verschlussstücks bewirkt.

Hhilfreich ist es auch, wenn das Ringpaket im Bereich des zweiten Endes zumindest eine zweite Bohrung aufweist.

Dadurch wird eine Flexibilität in Bezug auf eine Orientierung des Verschlussstücks in der erfindungsgemäßen Schalldämpfungsvorrichtung erreicht. Der Passstift oder das Passungsteil kann in die erste Bohrung im Bereich des ersten Endes des Ringpakets, alternativ aber auch in die zweite Bohrung im Bereich des zweiten Endes des Ringpakets eingeführt werden.

Günstig ist es außerdem, wenn das Ringpaket mit dem Verschlussstück verschraubt ist.

Durch diese Maßnahme wird eine besonders sichere Verbindung des Verschlussstücks mit dem Ringpaket bewirkt. Ist das Verschlussstück über den Passstift oder das Passungsteil mit dem Ringpaket gekoppelt und zusätzlich mit dem Ringpaket verschraubt, so wird eine redundante Verbindung des Verschlussstücks mit dem Ringpaket erreicht.

Eine vorteilhafte Lösung wird erzielt, wenn das Ringpaket das Verschlussstück überlappend ausgebildet und angeordnet ist. In diesem Zusammenhang ist es hilfreich, wenn der zumindest erste Ring zusammen mit dem Verschlussstück im Bereich der Öffnung einen Rücksprung bildend angeordnet ist.

Durch diese Maßnahmen wird auf dem Ringpaket ein Montagebereich (z.B. mit der ersten Bohrung oder dem Passstift bzw. dem Passungsteil) zur Verbindung des Verschlussstücks mit dem Ringpaket bereitgehalten.

Für einen Einführungsvorgang des Ringpakets in dessen Träger ist es vorteilhaft, wenn der zumindest erste Ring einen größeren Außendurchmesser als der zweite Ring aufweist.

Eine besondere sichere Verbindung des Ringpakets mit dessen Träger erzielt man, wenn der zumindest erste Ring in einer Nut des Radkörpers, welche auf einer Seite eines Radkranzes des Rads, welche einer Lauffläche des Rads abgewandt ist, vorgesehen ist, mit dem Radkörper verspannbar ist.

Durch diese Maßnahme wird außerdem eine besonders effektive Schalldämpfung erreicht, da das Ringpaket nahe an der Lauffläche des Rads, d.h. in einem Bereich mit starker Schallemission, angeordnet ist.

Hilfreich ist es weiterhin, wenn das Verschlussstück in einer Weise ausgeführt und angeordnet ist, dass eine Gesamtunwucht des Rads mit der Schalldämpfungsvorrichtung gleich oder kleiner als ein Gesamtunwucht-Grenzwert des Rads ist.

Durch diese Maßnahme wird vermieden, dass das Rad aufgrund der erfindungsgemäßen Schalldämpfungsvorrichtung eine unzulässig große Gesamtunwucht aufweist.

Zur Montage der erfindungsgemäßen Schalldämpfungsvorrichtung auf einem Rad ist es günstig, wenn in einem ersten Montageschritt das Ringpaket unter Vorspannung in die Vertiefung des Radkörpers eingeführt wird, in einem zweiten Montageschritt das Verschlussstück in die Öffnung eingeführt wird und in einem dritten Montageschritt das Verschlussstück formschlüssig oder/und kraftschlüssig mit dem Ringpaket verbunden oder/und mit dem Ringpaket verklebt wird, wobei das Ringpaket zumindest im Bereich des ersten Endes des Ringpakets zumindest eine erste Bohrung aufweist, in welche ein Passstift des Verschlussstücks oder ein mit dem Verschlussstück verbundenes Passungsteil eingeführt wird oder zumindest im Bereich des ersten Endes das Ringpaket zumindest einen Passstift aufweist oder mit dem Ringpaket zumindest ein Passungsteil verbunden ist, welcher oder welches in eine Bohrung des Verschlussstücks eingeführt wird.

Dadurch wird eine schnelle und sichere Verbindung der erfindungsgemäßen Schalldämpfungsvorrichtung mit dem Rad bewirkt.

Nachfolgend wird die Erfindung anhand von Ausführungsbeispielen näher erläutert.

Es zeigen beispielhaft:
- Fig. 1:: Einen Grundriss einer beispielhaften ersten Ausführungsvariante einer erfindungsgemäßen, mit einem Rad verbundenen Schalldämpfungsvorrichtung mit einem Ringpaket und einem Verschlussstück,
- Fig. 2:: Eine erste Teilansicht eines Seitenrisses einer beispielhaften zweiten Ausführungsvariante einer erfindungsgemäßen Schalldämpfungsvorrichtung in geschnittener Darstellung, wobei ein Ringpaket mit einem Rad verbunden ist, und
- Fig. 3:: Eine zweite Teilansicht des Seitenrisses der beispielhaften zweiten Ausführungsvariante einer erfindungsgemäßen Schalldämpfungsvorrichtung in geschnittener Darstellung, wobei ein Verschlussstück sichtbar ist.

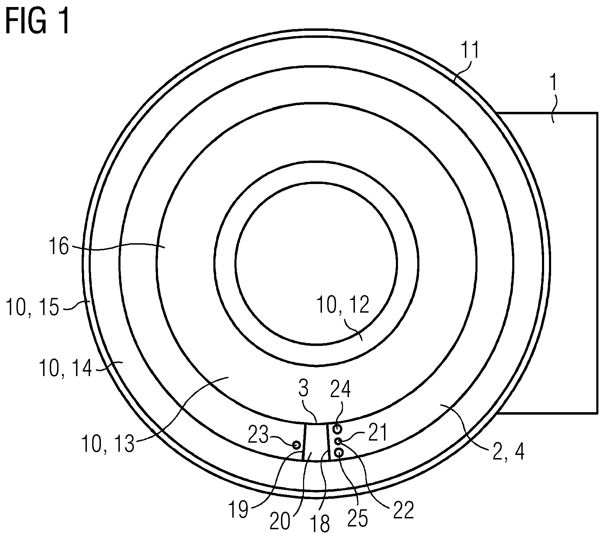

Fig. 1 zeigt einen Grundriss einer beispielhaften ersten Ausführungsvariante einer erfindungsgemäßen Schalldämpfungsvorrichtung, welche mit einem Rad eines Fahrwerks eines Schienenfahrzeugs, welches eine Klotzbremse 1 aufweist, verbunden ist.

Erfindungsgemäß ist es jedoch auch denkbar, dass das Fahrwerk keine oder eine andere Bremse aufweist. Weist das Fahrwerk beispielsweise eine Radscheibenbremse auf, so kann die erfindungsgemäße Schalldämpfungsvorrichtung innerhalb oder außerhalb eines Reibrings der Radscheibenbremse auf dem Rad angeordnet sein.

Die Schalldämpfungsvorrichtung umfasst ein Ringpaket 2 und ein Verschlussstück 3. Das Ringpaket 2 weist einen offenen ersten Ring 4, einen offenen zweiten Ring 5 und einen offenen dritten Ring 6 auf, welche über eine viskoelastische erste Schicht 7 sowie eine viskoelastische zweite Schicht 8 über Vulkanisierung miteinander verbunden sind.

Der zweite Ring 5, der dritte Ring 6 sowie die erste Schicht 7 und die zweite Schicht 8 sind in Fig. 1 nicht sichtbar.

Der erste Ring 4 ist in eine als Nut 9 ausgebildete, in Fig. 1 nicht sichtbare Vertiefung eines Radkörpers 10 des Rads unter Eigenspannung eingeführt und in der Nut 9 mit dem Radkörper 10 verspannt.

Das Rad umfasst den Radkörper 10 sowie eine Lauffläche 11, welche eine Schiene eines in Fig. 1 nicht gezeigten Gleises kontaktiert. Der Radkörper 10 weist eine Radnabe 12, einen Radsteg 13 sowie einen Radkranz 14 mit einem Spurkranz 15 auf.

Die Nut 9 ist umlaufend in dem Radkranz 14 auf einer der Lauffläche 11 abgewandten bzw. gegenüberliegenden Seite ausgebildet, wodurch sich das Ringpaket 2 in Richtung der Radnabe 12 bzw. in Richtung einer Radmitte erstreckt.

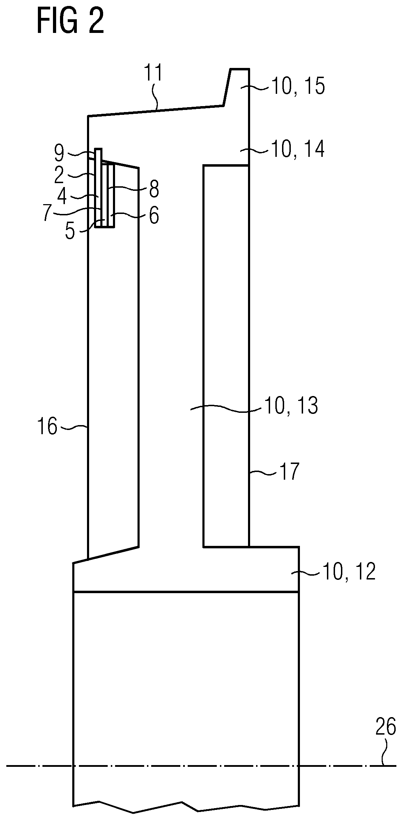

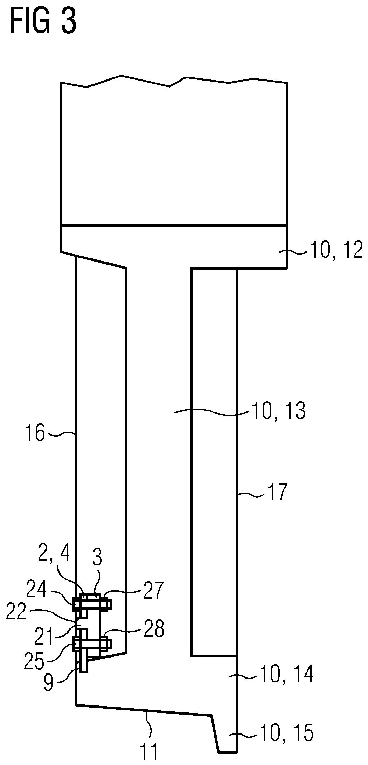

Der erste Ring 4 ist einer Radaußenseite 16, der dritte Ring 6 einer im Zusammenhang mit einer beispielhaften zweiten Ausführungsvariante einer erfindungsgemäßen Schalldämpfungsvorrichtung in Fig. 2 und Fig. 3 sichtbaren Radinnenseite 17 und dem Radsteg 13 zugewandt angeordnet. Der zweite Ring 5 ist dem ersten Ring 4 und dem dritten Ring 6 zwischengeordnet.

Zwischen dem dritten Ring 6 und dem Radsteg 13 ist ein ausreichender Freiraum zur Verbindung des Verschlussstücks 3 mit dem Ringpaket 2 vorgesehen.

Wie erwähnt sind der erste Ring 4, der zweite Ring 5 und der dritte Ring 6 als offene Ringe ausgeführt und ermöglichen dadurch ein Einführen des ersten Rings 4 in die Nut 9.

Das Ringpaket 2 weist dadurch weiterhin zwischen einem ersten Ende 18 des Ringpakets 2 und einem zweiten Ende 19 des Ringpakets 2 eine Öffnung 20 auf.

Diese Öffnung 20 ist in jenem in Fig. 1 gezeigten Montagezustand der erfindungsgemäßen Schalldämpfungsvorrichtung mittels des Verschlussstücks 3 teilweise ausgefüllt.

Das Verschlussstück 3 ist in diesem Montagezustand zwischen dem Radsteg 13 und dem ersten Ring 4 angeordnet, wobei der erste Ring 4 das Verschlussstück 3 im Bereich des ersten Endes 18 überlappt. Dadurch ist die Öffnung 20 im Bereich des ersten Rings 4 nicht durch das Verschlussstück 3 ausgefüllt. Vielmehr bildet der erste Ring 4 zusammen mit dem Verschlussstück 3 im Bereich der Öffnung 20 einen Rücksprung.

Das Verschlussstück 3 ist in Stahl ausgebildet und weist einen zylindrischen Passstift 21 auf, welcher einstückig mit dem Verschlussstück 3 ausgebildet ist. In jenem in Fig. 1 gezeigten Montagezustand ist der Passstift 21 mit einer Presspassung in eine erste Bohrung 22 des ersten Rings 4, welche im Bereich des ersten Endes 18 des Ringpakets 2 vorgesehen ist, eingeführt.

Zusätzlich sind das Verschlussstück 3 und der erste Ring 4 mittels einer ersten Sechskantschraube 24 und einer zweiten Sechskantschraube 25 miteinander verschraubt.

Im Bereich des zweiten Endes 19 ist zwischen dem Verschlussstück 3 und dem Ringpaket 2 ein schmaler Spalt entlang von Kanten des Verschlussstücks 3 und des Ringpakets 2 ausgebildet, welcher in Richtung einer beispielhaft in Fig. 2 gezeigten Radachse 26 verläuft.

Im Bereich des zweiten Endes 19 des Ringpakets 2 weist der erste Ring 4 eine zweite Bohrung 23 auf, wodurch das Verschlussstück 3 bei geeigneter geometrischer Ausbildung auch in einer in Bezug auf den in Fig. 1 gezeigten Montagezustand um 180° gedrehten Orientierung mit dem Ringpaket 2 verbunden werden kann, wobei der Passstift 21 in die zweite Bohrung 23 einzuführen ist. Soll das Verschlussstück 3 in dieser um 180° gedrehten Orientierung mit dem Ringpaket 2 verschraubt werden, so müssen im Bereich des zweiten Endes 19 des Ringpakets 2 zusätzliche Bohrungen für Schrauben gefertigt werden.

Erfindungsgemäß ist es jedoch auch denkbar, auf die zweite Bohrung 23 zu verzichten und den ersten Ring 4 im Bereich des zweiten Endes 19 des Ringpakets 2 bündig mit dem zweiten Ring 5 und dem dritten Ring 6 auszubilden.

Erfindungsgemäß ist es ferner auch vorstellbar, dass nicht das Verschlussstück 3 den Passstift 21 aufweist, sondern beispielsweise der erste Ring 4, und dass nicht der erste Ring 4 die erste Bohrung 22 aufweist, sondern das Verschlussstück 3.

Darüber hinaus ist es beispielsweise auch denkbar, dass mehr als ein Passstift 21 des Verschlussstücks 3 oder des ersten Rings 4 in eine entsprechende Anzahl an Bohrungen des ersten Rings 4 oder des Verschlussstücks 3 eingeführt sind.

Ferner ist es möglich, den Passstift 21 oder ein anderes Passungsteil (z.B. ein quaderförmiges Passungsteil) separat auszubilden und mit dem Verschlussstück 3 oder mit dem Ringpaket 2 zu verbinden (z.B. zu verschweißen, zu verspannen etc.).

Das Verschlussstück 3 ist quaderförmig ausgebildet. Erfindungsgemäß ist es jedoch auch denkbar, dass das Verschlussstück 3 eine kreisringsektorförmige oder eine trapezförmige Grund- und Deckfläche aufweist.

Bei einer kreisringsektorförmigen oder trapezförmigen Ausbildung der Grund- und Deckfläche ist jedoch ein Verlust an Flexibilität bei der Orientierung des Verschlussstücks 3 in der Öffnung 20 und bei dessen Verbindung mit dem Ringpaket 2 zu berücksichtigen.

Aufgrund seiner Anordnung in der Öffnung 20, seiner Form, seiner der Öffnung 20 angepassten Dimensionen sowie seiner Masse trägt das Verschlussstück 3 im Ausmaß von 12 m·g zu einer Gesamtunwucht des Rads und der Schalldämpfungsvorrichtung von 27 m·g bei. Diese Gesamtunwucht ist somit kleiner als ein Gesamtunwucht-Grenzwert des Rads von 30 m·g.

Zur Montage der erfindungsgemäßen Schalldämpfungsvorrichtung wird in einem ersten Montageschritt der erste Ring 4 unter Vorspannung in die Nut 9 des Radkörpers 10 eingeführt, wird in einem zweiten Montageschritt das Verschlussstück 3 in die Öffnung 20 und in den Freiraum zwischen dem Radkörper 10 und dem Ringpaket 2 eingeführt und wird in einem dritten Montageschritt das Verschlussstück 3 mittels Einführens des Passstifts 21 in die erste Bohrung 22 und mittels Verschraubens formschlüssig und kraftschlüssig mit dem Ringpaket 2 verbunden.

Erfindungsgemäß ist es auch denkbar, vor Einführung des ersten Rings 4 in die Nut 9 eine handelsübliche Montagepaste in die Nut 9 einzubringen.

Weiterhin ist es vorstellbar, das Verschlussstück 3 mit dem Ringpaket 2 zu verkleben.

In Fig. 2 ist eine erste Teilansicht eines Seitenrisses einer beispielhaften zweiten Ausführungsvariante einer erfindungsgemäßen Schalldämpfungsvorrichtung geschnitten dargestellt, bei welcher ein Ringpaket 2 mit einem Rad eines Fahrwerks eines Schienenfahrzeugs verbunden ist.

Das Ringpaket 2 weist einen offenen ersten Ring 4, einen offenen zweiten Ring 5 und einen offenen dritten Ring 6 auf, welche über eine viskoelastische erste Schicht 7 sowie eine viskoelastische zweite Schicht 8 über Vulkanisierung miteinander verbunden sind.

Die erste Schicht 7 ist dabei dem ersten Ring 4 und dem zweiten Ring 5 zwischengeordnet, die zweite Schicht 8 dem zweiten Ring 5 und dem dritten Ring 6.

Erfindungsgemäß ist es jedoch auch vorstellbar, anstatt der ersten Schicht 7 und der zweiten Schicht 8 zwischen dem ersten Ring 4 und dem zweiten Ring 5 einen offenen ersten Elastikring sowie zwischen dem zweiten Ring 5 und dem dritten Ring 6 einen offenen zweiten Elastikring vorzusehen und den ersten Elastikring und den zweiten Elastikring mit dem Ringpaket 2 zu verbinden (z.B. zu verkleben).

Die erste Schicht 7 und die zweite Schicht 8 sind in einem Elastomerwerkstoff ausgeführt und weisen jeweils eine Dicke von ca. 2 mm auf.

Der erste Ring 4, der zweite Ring 5 und der dritte Ring 6 weisen jeweils eine Dicke von ca. 5 mm auf und sind in Stahl ausgebildet. Erfindungsgemäß ist jedoch auch ein Einsatz anderer Werkstoffe für den ersten Ring 4, den zweiten Ring 5 und den dritten Ring 6 möglich, wie beispielsweise Edelstahl, Kupfer etc.

Der erste Ring 4 weist einen größeren Außendurchmesser als der zweite Ring 5 und der dritte Ring 6 auf. Ein entsprechender Überstand des ersten Rings 4 ist unter Vorspannung des ersten Rings 4 in eine als Nut 9 ausgebildete Vertiefung eines Radkörpers 10 des Rads eingeführt und in der Nut 9 mit dem Radkörper 10 verspannt.

Das Rad umfasst den Radkörper 10 sowie eine Lauffläche 11, welche eine Schiene eines in Fig. 2 nicht gezeigten Gleises kontaktiert. Der Radkörper 10 weist eine Radnabe 12, einen Radsteg 13 sowie einen Radkranz 14 mit einem Spurkranz 15 auf.

Die Nut 9 ist umlaufend in dem Radkranz 14 auf einer der Lauffläche 11 abgewandten Seite ausgebildet, wodurch sich das Ringpaket 2 in Richtung der Radnabe 12 bzw. in Richtung einer Radmitte (Radachse 26) erstreckt.

Der erste Ring 4 ist einer Radaußenseite 16, der dritte Ring 6 einer Radinnenseite 17 und dem Radsteg 13 zugewandt angeordnet. Der zweite Ring 5 ist dem ersten Ring 4 und dem dritten Ring 6 zwischengeordnet.

Zwischen dem dritten Ring 6 und dem Radsteg 13 ist ein ausreichender Freiraum zur Verbindung eines in Fig. 3 sichtbaren Verschlussstücks 3 mit dem Ringpaket 2 vorgesehen.

Die Schalldämpfungsvorrichtung ist an der Radaußenseite 16 vorgesehen. Erfindungsgemäß ist es jedoch auch vorstellbar, die Schalldämpfungsvorrichtung an der Radinnenseite 17 mit dem Rad zu verbinden.

Weiterhin ist es denkbar, eine erste Schalldämpfungsvorrichtung an der Radaußenseite 16 und eine zweite Schalldämpfungsvorrichtung an der Radinnenseite 17 anzuordnen, wobei die zweite Schalldämpfungsvorrichtung auf einer ersten Nut (der Nut 9) in Bezug auf den Radsteg 13 gegenüberliegenden Seite in einer zweiten Nut mit dem Radkörper 10 verspannt werden kann.

In Fig. 3 ist eine zweite Teilansicht eines Seitenrisses jener beispielhaften zweiten Ausführungsvariante einer erfindungsgemäßen Schalldämpfungsvorrichtung, die auch in Fig. 2 gezeigt ist, geschnitten dargestellt.

Die Schalldämpfungsvorrichtung weist ein Ringpaket 2 und ein quaderförmiges Verschlussstück 3 auf.

Von dem Ringpaket 2, welches, wie in Fig. 2 gezeigt, einen offenen ersten Ring 4, einen offenen zweiten Ring 5 und einen offenen dritten Ring 6 sowie eine viskoelastische erste Schicht 7 und eine viskoelastische zweite Schicht 8 aufweist, ist in Fig. 3 nur der erste Ring 4 sichtbar.

Die Schalldämpfungsvorrichtung ist mit einem Radkörper 10 eines Rads eines Fahrwerks eines Schienenfahrzeugs verbunden. Das Rad umfasst den Radkörper 10 sowie eine Lauffläche 11. Der Radkörper 10 weist eine Radnabe 12, einen Radsteg 13 sowie einen Radkranz 14 mit einem Spurkranz 15 auf.

Der erste Ring 4 ist, wie auch im Zusammenhang mit Fig. 1 und Fig. 2 beschrieben, in eine Nut 9 eingeführt, welche in dem Radkranz 14, der Lauffläche 11 gegenüberliegend, vorgesehen ist.

Das Ringpaket 2 weist eine Öffnung 20 auf, die im Zusammenhang mit einer beispielhaften ersten Ausführungsvariante einer erfindungsgemäßen Schalldämpfungsvorrichtung in Fig. 1 sichtbar ist.

Diese Öffnung 20 ist mittels des Verschlussstücks 3 teilweise ausgefüllt. Das Verschlussstück 3 ist in jenem in Fig. 3 gezeigten Montagezustand zwischen dem Radsteg 13 und dem ersten Ring 4 angeordnet, wobei der erste Ring 4 das Verschlussstück 3 im Bereich eines im Zusammenhang mit der beispielhaften ersten Ausführungsvariante einer erfindungsgemäßen Schalldämpfungsvorrichtung in Fig. 1 sichtbaren ersten Endes 18 des Ringpakets 2 überlappt.

Das Verschlussstück 3 ist in Stahl ausgebildet, wobei jedoch auch andere Werkstoffe denkbar sind, wie beispielsweise Edelstahl, Kupfer etc.

Das Verschlussstück 3 weist einen Passstift 21 auf. Eine Gesamtdicke des Verschlussstücks 3 mit dem Passstift 21 beträgt ca. 20 mm.

Um das Verschlussstück 3 in einen Bereich zwischen dem Radsteg 13 und dem ersten Ring 4 einführen zu können, beträgt eine Distanz zwischen dem Radsteg 13 und dem ersten Ring 4 ca. 30 mm.

In dem in Fig. 3 gezeigten Montagezustand ist der Passstift 21 mit einer Presspassung in eine erste Bohrung 22 des ersten Rings 4, welche im Bereich des ersten Endes 18 des Ringpakets 2 vorgesehen ist, eingeführt.

Zusätzlich sind das Verschlussstück 3 und der erste Ring 4 im Bereich des ersten Endes 18 des Ringpaktes 2 mittels einer ersten Sechskantschraube 24 und einer ersten Mutter 27 sowie einer zweiten Sechskantschraube 25 und einer zweiten Mutter 28 miteinander verschraubt.

Das Verschlussstück 3 ist somit formschlüssig und kraftschlüssig mit dem Ringpaket 2 verbunden.

Die erste Sechskantschraube 24 und die zweite Sechskantschraube 25 sind als Durchgangsschrauben ausgebildet. Erfindungsgemäß ist jedoch auch eine Anordnung von Sacklochschrauben zwischen dem Ringpaket 2 und dem Verschlussstück 3 denkbar, wodurch auf die erste Mutter 27 und die zweite Mutter 28 verzichtet werden kann.

Wie auch im Zusammenhang mit Fig. 1 beschrieben, ist das Verschlussstück 3 in einer Weise ausgeführt und angeordnet, dass eine Gesamtunwucht des Rads mit der erfindungsgemäßen Schalldämpfungsvorrichtung kleiner als ein Gesamtunwucht-Grenzwert des Rads ist.

### Liste der Bezeichnungen

- 1: Klotzbremse
- 2: Ringpaket
- 3: Verschlussstück
- 4: Erster Ring
- 5: Zweiter Ring
- 6: Dritter Ring
- 7: Erste Schicht
- 8: Zweite Schicht
- 9: Nut
- 10: Radkörper
- 11: Lauffläche
- 12: Radnabe
- 13: Radsteg
- 14: Radkranz
- 15: Spurkranz
- 16: Radaußenseite
- 17: Radinnenseite
- 18: Erstes Ende
- 19: Zweites Ende
- 20: Öffnung
- 21: Passstift
- 22: Erste Bohrung
- 23: Zweite Bohrung
- 24: Erste Sechskantschraube
- 25: Zweite Sechskantschraube
- 26: Radachse
- 27: Erste Mutter
- 28: Zweite Mutter

## Patentansprüche

1. Schalldämpfungsvorrichtung für Fahrzeugräder, insbesondere für Räder von Schienenfahrzeugen, umfassend ein Ringpaket (2) mit zumindest einem offenen ersten Ring (4) und einem offenen zweiten Ring (5), welchen eine viskoelastische erste Schicht (7) oder ein offener Elastikring zwischengeordnet ist, wobei zumindest der erste Ring (4) in einer Vertiefung eines Radkörpers (10) eines Rads mit dem Radkörper (10) verspannbar ist, **dadurch gekennzeichnet, dass** ein Verschlussstück (3) formschlüssig oder/und kraftschlüssig mit dem Ringpaket (2) verbunden oder/und mit dem Ringpaket (2) verklebt ist, wobei das Verschlussstück (3) in einer Öffnung (20) zwischen einem ersten Ende (18) des Ringpakets (2) und einem zweiten Ende (19) des Ringpakets (2) angeordnet ist, wobei das Ringpaket (2) zumindest im Bereich des ersten Endes (18) zumindest eine erste Bohrung (22) aufweist, in welche ein Passstift (21) des Verschlussstücks (3) oder ein mit dem Verschlussstück (3) verbundenes Passungsteil eingeführt ist oder zumindest im Bereich des ersten Endes (18) das Ringpaket (2) zumindest einen Passstift (21) aufweist oder mit dem Ringpaket (2) zumindest ein Passungsteil verbunden ist, welcher oder welches in eine Bohrung des Verschlussstücks (3) eingeführt ist.

2. Schalldämpfungsvorrichtung nach Anspruch 1, **dadurch gekennzeichnet, dass** zwischen dem Verschlussstück (3) und dem Ringpaket (2) im Bereich des ersten Endes (18) oder des zweiten Endes (19) ein Spalt ausgebildet ist.

3. Schalldämpfungsvorrichtung nach Anspruch 1 oder 2, **dadurch gekennzeichnet, dass** das Verschlussstück (3) zwischen einem Radsteg (13) und dem zumindest ersten Ring (4) anordenbar ist.

4. Schalldämpfungsvorrichtung nach einem der Ansprüche 1 bis 3, **dadurch gekennzeichnet, dass** das Ringpakets (2) im Bereich des zweiten Endes (19) zumindest eine zweite Bohrung (23) aufweist.

5. Schalldämpfungsvorrichtung nach einem der Ansprüche 1 bis 4, **dadurch gekennzeichnet, dass** das Ringpaket (2) mit dem Verschlussstück (3) verschraubt ist.

6. Schalldämpfungsvorrichtung nach einem der Ansprüche 1 bis 5, **dadurch gekennzeichnet, dass** das Ringpaket (2) das Verschlussstück (3) überlappend ausgebildet und angeordnet ist.

7. Schalldämpfungsvorrichtung nach Anspruch 6, **dadurch gekennzeichnet, dass** der zumindest erste Ring (4) zusammen mit dem Verschlussstück (3) im Bereich der Öffnung (20) einen Rücksprung bildend angeordnet ist.

8. Schalldämpfungsvorrichtung nach einem der Ansprüche 1 bis 7, **dadurch gekennzeichnet, dass** der zumindest erste Ring (4) einen größeren Außendurchmesser als der zweite Ring (5) aufweist.

9. Schalldämpfungsvorrichtung nach einem der Ansprüche 1 bis 8, **dadurch gekennzeichnet, dass** der zumindest erste Ring (4) in einer Nut (9) des Radkörpers (10), welche auf einer Seite eines Radkranzes (14) des Rads, welche einer Lauffläche (11) des Rads abgewandt ist, vorgesehen ist, mit dem Radkörper (10) verspannbar ist.

10. Schalldämpfungsvorrichtung nach einem der Ansprüche 1 bis 9, **dadurch gekennzeichnet, dass** das Verschlussstück (3) in einer Weise ausgeführt und angeordnet ist, dass eine Gesamtunwucht des Rads mit der Schalldämpfungsvorrichtung gleich oder kleiner als ein Gesamtunwucht-Grenzwert des Rads ist.

11. Rad für Schienenfahrzeuge mit zumindest einer Schalldämpfungsvorrichtung nach einem der Ansprüche 1 bis 10.

12. Rad nach Anspruch 11, **dadurch gekennzeichnet, dass** eine erste Schalldämpfungsvorrichtung an einer Radaußenseite (16) vorgesehen ist und eine zweite Schalldämpfungsvorrichtung an einer Radinnenseite (17) vorgesehen ist.

13. Fahrwerk für Schienenfahrzeuge mit Rädern nach Anspruch 11 oder 12, **dadurch gekennzeichnet, dass** zumindest eine Klotzbremse (1) vorgesehen ist.

14. Verfahren zur Montage einer Schalldämpfungsvorrichtung nach einem der Ansprüche 1 bis 10 auf einem Rad nach Anspruch 11 oder 12, **dadurch gekennzeichnet, dass** in einem ersten Montageschritt das Ringpaket (2) unter Vorspannung in die Vertiefung des Radkörpers (10) eingeführt wird, in einem zweiten Montageschritt das Verschlussstück (3) in die Öffnung (20) eingeführt wird und in einem dritten Montageschritt das Verschlussstück (3) formschlüssig oder/und kraftschlüssig mit dem Ringpaket (2) verbunden oder/und mit dem Ringpaket (2) verklebt wird, wobei das Ringpaket (2) zumindest im Bereich des ersten Endes (18) des Ringpakets (2) zumindest eine erste Bohrung (22) aufweist, in welche ein Passstift (21) des Verschlussstücks (3) oder ein mit dem Verschlussstück (3) verbundenes Passungsteil eingeführt wird oder zumindest im Bereich des ersten Endes (18) das Ringpaket (2) zumindest einen Passstift (21) aufweist oder mit dem Ringpaket (2) zumindest ein Passungsteil verbunden ist, welcher oder welches in eine Bohrung des Verschlussstücks (3) eingeführt wird.

## Claims

1. Sound attenuation device for vehicle wheels, especially for wheels of rail vehicles, comprising a ring assembly (2) with at least one open first ring (4) and an open second ring (5), between which a viscoelastic first layer (7) or an open elastic ring is arranged, wherein at least the first ring (4) is able to be clamped to the wheel body (10) in a recess of a wheel body (10) of a wheel, **characterised in that** a closure piece (3) is connected in a form fit or/and force fit manner to the ring assembly (2) or/and is glued to the ring assembly (2), wherein the closure piece (3) is arranged in an opening (20) between a first end (18) of the ring assembly (2) and a second end (19) of the ring assembly (2), wherein the ring assembly (2), at least in the area of the first end (18), has at least one first hole (22), into which a locating pin (21) of the closure piece (3) or a locating part connected to the closure piece (3) is inserted or the ring assembly (2), at least in the area of the first end (18), has at least one locating pin (21) or at least one locating part, which is inserted into a hole of the closure piece (3), is connected to the ring assembly (2).

2. Sound attenuation device according to claim 1,
**characterised in that** a gap is arranged between the closure piece (3) and the ring assembly (2) in the area of the first end (18) or the second end (19).

3. Sound attenuation device according to claim 1 or 2,
**characterised in that** the closure piece (3) is able to be arranged between a wheel web (13) and the at least first ring (4).

4. Sound attenuation device according to one of claims 1 to 3,
**characterised in that** the ring assembly (2), in the area of the second end (19), has at least one second hole (23).

5. Sound attenuation device according to one of claims 1 to 4,
**characterised in that** the ring assembly (2) is screwed to the closure piece (3).

6. Sound attenuation device according to one of claims 1 to 5,
**characterised in that** the ring assembly (2) is embodied and arranged overlapping the closure piece (3).

7. Sound attenuation device according to claim 6,
**characterised in that** the at least first ring (4) is arranged together with the closure piece (3) forming a set-back portion in the area of the opening (20).

8. Sound attenuation device according to one of claims 1 to 7,
**characterised in that** the at least first ring (4) has a greater outer diameter than the second ring (5).

9. Sound attenuation device according to one of claims 1 to 8,
**characterised in that** the at least first ring (4) is able to be clamped to the wheel body (10) in a groove (9) of the wheel body (10), which is provided on a side of a wheel rim (14) of the wheel that faces away from a running surface (11) of the wheel.

10. Sound attenuation device according to one of claims 1 to 9, **characterised in that** the closure piece (3) is embodied and arranged in such a way that an overall imbalance of the wheel with the sound attenuation device is equal to or less than an overall imbalance limit value of the wheel.

11. Wheel for rail vehicles with at least one sound attenuation device according to one of claims 1 to 10.

12. Wheel according to claim 11, **characterised in that** a first sound attenuation device is provided on a wheel outer side (16) and a second sound attenuation device is provided on a wheel inner side (17).

13. Bogie for rail vehicles with wheels according to claim 11 or 12, **characterised in that** at least one shoe brake (1) is provided.

14. Method for installation of a sound attenuation device according to one of claims 1 to 10 on a wheel according to claim 11 or 12, **characterised in that** in a first installation step, the ring assembly (2) is inserted under pre-tension into the recess of the wheel body (10), in a second installation step, the closure piece (3) is inserted into the opening (20) and, in a third installation step, the closure piece (3) is connected in a form fit or/and force fit manner to the ring assembly (2) or/and is glued to the ring assembly (2), wherein the ring assembly (2), at least in the area of the first end (18), has at least one first hole (22), into which a locating pin (21) of the closure piece (3) or a locating part connected to the closure piece (3) is inserted or the ring assembly (2), at least in the area of the first end (18), has at least one locating pin (21) or at least one locating part, which is inserted into a hole of the closure piece (3), is connected to the ring assembly (2).

## Revendications

1. Dispositif d'atténuation acoustique pour roues de véhicule, en particulier pour roues de véhicules ferroviaires, comprenant un paquet de bagues (2) avec au moins une première bague ouverte (4) et une deuxième bague ouverte (5), entre lesquelles est disposée une première couche viscoélastique (7) ou une bague élastique ouverte, dans lequel au moins la première bague (4) peut être serrée dans un renfoncement d'un corps de roue (10) d'une roue contre le corps de roue (10), **caractérisé en ce qu'**un obturateur (3) est relié au paquet de bagues (2) par complémentarité de forme ou/et par coopération de forces ou/et est collé au paquet de bagues (2), dans lequel l'obturateur (3) est disposé dans une ouverture (20) entre une première extrémité (18) du paquet de bagues (2) et une deuxième extrémité (19) du paquet de bagues (2), le paquet de bagues (2) présentant au moins dans la zone de la première extrémité (18) au moins un premier alésage (22), dans lequel est introduit un goujon d'ajustement (21) de l'obturateur (3) ou est introduite une pièce d'ajustement reliée à l'obturateur (3), ou au moins dans la zone de la première extrémité (18), le paquet de bagues (2) présente au moins un goujon d'ajustement (21) ou au moins une pièce d'ajustement est reliée au paquet de bagues (2), lequel ou laquelle est introduit(e) dans un alésage de l'obturateur (3).

2. Dispositif d'atténuation acoustique selon la revendication 1, **caractérisé en ce qu'**une fente est constituée entre l'obturateur (3) et le paquet de bagues (2) dans la zone de la première extrémité (18) ou de la deuxième extrémité (19).

3. Dispositif d'atténuation acoustique selon la revendication 1 ou 2, **caractérisé en ce que** l'obturateur (3) peut être disposé entre une âme de roue (13) et l'au moins une première bague (4).

4. Dispositif d'atténuation acoustique selon l'une des revendications 1 à 3, **caractérisé en ce que** le paquet de bagues (2) présente dans la zone de la deuxième extrémité (19) au moins un deuxième alésage (23).

5. Dispositif d'atténuation acoustique selon l'une des revendications 1 à 4, **caractérisé en ce que** le paquet de bagues (2) est vissé avec l'obturateur (3).

6. Dispositif d'atténuation acoustique selon l'une des revendications 1 à 5, **caractérisé en ce que** le paquet de bagues (2) est constitué et disposé en chevauchement de l'obturateur (3).

7. Dispositif d'atténuation acoustique selon la revendication 6, **caractérisé en ce que** l'au moins une première bague (4) est disposée conjointement à l'obturateur (3) dans la zone de l'ouverture (20) de sorte à former un évidement.

8. Dispositif d'atténuation acoustique selon l'une des revendications 1 à 7, **caractérisé en ce que** l'au moins une première bague (4) présente un diamètre externe supérieur à celui de la deuxième bague (5).

9. Dispositif d'atténuation acoustique selon l'une des revendications 1 à 8, **caractérisé en ce que** l'au moins une première bague (4) peut être serrée contre le corps de roue (10) dans une rainure (9) du corps de roue (10), laquelle est prévue sur une face d'une jante de roue (14) de la roue, laquelle est opposée à une bande de roulement (11) de la roue.

10. Dispositif d'atténuation acoustique selon l'une des revendications 1 à 9, **caractérisé en ce que** l'obturateur (3) est réalisé et disposé d'une manière telle qu'un déséquilibre global de la roue avec le dispositif d'atténuation acoustique soit égal ou inférieur à une valeur limite de déséquilibre global de la roue.

11. Roue pour véhicules ferroviaires avec au moins un dispositif d'atténuation acoustique selon l'une des revendications 1 à 10.

12. Roue selon la revendication 11, **caractérisée en ce qu'**un premier dispositif d'atténuation acoustique est prévu au niveau d'une face externe de roue (16) et qu'un deuxième dispositif d'atténuation acoustique est prévu au niveau d'une face interne de roue (17).

13. Châssis pour véhicules ferroviaires avec des roues selon la revendication 11 ou 12, **caractérisé en ce qu'**au moins un frein à sabot (1) est prévu.

14. Procédé pour le montage d'un dispositif d'atténuation acoustique selon l'une des revendications 1 à 10 sur une roue selon la revendication 11 ou 12, **caractérisé en ce que** dans une première étape de montage, le paquet de bagues (2) est introduit sous précontrainte dans le renfoncement du corps de roue (10), dans une deuxième étape de montage, l'obturateur (3) est introduit dans l'ouverture (20), et dans une troisième étape de montage, l'obturateur (3) est relié au paquet de bagues (2) par complémentarité de forme ou/et par coopération de forces ou/et est collé au paquet de bagues (2), le paquet de bagues (2) présentant au moins dans la zone de la première extrémité (18) du paquet de bagues (2) au moins un premier alésage (22), dans lequel est introduit un goujon d'ajustement (21) de l'obturateur (3) ou est introduite une pièce d'ajustement reliée à l'obturateur (3), ou au moins dans la zone de la première extrémité (18), le paquet de bagues (2) présente au moins un goujon d'ajustement (21) ou au moins une pièce d'ajustement est reliée au paquet de bagues (2), lequel ou laquelle est introduit(e) dans un alésage de l'obturateur (3).
